# EUROPEAN PATENT SPECIFICATION

(11) **EP 4 203 443 B1**
(45) Date of publication and mention of the grant of the patent: **11.02.2026**
(21) Application number: 22216354.5
(22) Date of filing: 23.12.2022
(51) Int. Cl.: H04L 41/0806, H04L 41/5054, H04L 67/00

(54) **METHOD, DEVICE, APPARATUS AND MEDIUM FOR SERVICE PROVISION**
VERFAHREN, VORRICHTUNG, GERÄT UND MEDIUM ZUR DIENSTBEREITSTELLUNG
PROCÉDÉ, DISPOSITIF, APPAREIL ET SUPPORT DE FOURNITURE DE SERVICE

(30) Priority: 24.12.2021 CN 202111600951
(43) Date of publication of application: 28.06.2023
(73) Proprietor: Nokia Solutions and Networks Oy, 02610 Espoo (FI)
(72) Inventor: LIU, Gang, Shanghai, 200000 (CN); ZHANG, Kaibin, Shanghai, 201204 (CN)
(74) Representative: DREISS Patentanwälte PartG mbB

(56) References cited:
- US-A1- 2011 153 634
- US-A1- 2015 103 823

## Description

### FIELD

Embodiments of the present disclosure relate to the field of communication, and more specifically to a method, device, apparatus and computer readable storage medium for service provision.

### BACKGROUND

**In** recent years, as telecom operators deploy a lot of infrastructure facilities, there has occurred a significant trend of convergence development of the network and computation. Telecom operators may open and lease their computing resources to a third party instead of only providing network access services.

Therefore, a vision of a computing power network is to establish an open and united computing resource management platform for resource consumers to support any service of resource consumers more efficiently. Any resource provider such as telecom operators, internet companies, cloud companies, universities, associations, and even individuals may connect to the computing resource management platform and open their computing resources to potential resource consumers.

However, under the general trend of the convergence of the network and computation, the high collaboration between the network and computation is required. How to perform reasonable service deployment and resource management while considering the location and service requirements of resource consumers, as well as the load and network performance of the computing resource management platform is still a problem to be solved. US 2011/0153634 A1 discloses method and apparatus for locating services within peer-to-peer networks. US 2015/0103823 A1 discloses a service processing method, device and system.

### SUMMARY

In general, embodiments of the present disclosure relate to an improved scheme for service provision.

In a first aspect of the present disclosure, there is provided a method of service provision according to claim 1.

In a second aspect of the present disclosure, there is provided a method of service provision according to claim 9.

In a third aspect of the present disclosure, there is provided an apparatus. The apparatus comprises at least one processor; and a memory coupled to the at least one processor, the at least one memory comprising instructions stored therein, the instruction, when executed by the at least one processor, causing the apparatus to perform the method according to the first aspect.

In a fourth aspect of the present disclosure, there is provided an apparatus. The apparatus comprises at least one processor; and a memory coupled to the at least one processor, the memory comprising instructions stored therein, the instruction, when executed by the at least one processor, causing the apparatus to perform the method according to the second aspect.

In a fifth aspect of the present disclosure, there is provided a device according to claim 17.

In a sixth aspect of the present disclosure, there is provided a device according to claim 18.

In a seventh aspect of the present disclosure, there is provided a computer readable storage medium storing a computer code thereon, the computer code being configured to, when executed, cause an apparatus to perform the method of the first aspect.

In an eighth aspect of the present disclosure, there is provided a computer readable storage medium storing a computer code thereon, the computer code being configured to, when executed, cause an apparatus to perform the method of the second aspect.

It should be appreciated that this Summary is not intended to identify key features or essential features of the claimed subject matter, nor is it intended to be used to limit the scope of the claimed subject matter. Other features of this Summary will be made apparent through the following depictions.

### BRIEF DESCRIPTION OF THE DRAWINGS

Embodiments of the present disclosure are presented by way of examples and their advantages are explained in more detail below with reference to figures, wherein
FIG 1A illustrates a schematic diagram of a method of centralized service provision;
FIG 1B illustrates a schematic diagram of a method of distributed service provision;
FIG 2 illustrates an example environment in which embodiments of the present disclosure may be implemented;
FIG 3 illustrates a flowchart of an example method of service provision according to some embodiments of the present disclosure;
FIG 4 illustrates an example process of service provision determination according to some embodiments of the present disclosure;
FIG 5 illustrates a flowchart of an example method implemented at a computing device according to some embodiments of the present disclosure;
FIG 6 illustrates an example process for generating an identifier of a service, according to some embodiments of the present disclosure;
FIG 7 illustrates a flowchart of an example method implemented at a computing device according to some other embodiments of the present disclosure;
FIG 8 illustrates a flow chart of an example method of service provision according to some other embodiments of the present disclosure;
FIG 9 illustrates a simplified block diagram of an electronic device suitable for implementing embodiments of the present disclosure; and
FIG 10 illustrates a schematic diagram of a computer-readable storage medium suitable for implementing embodiments of the present disclosure.

The same or similar reference numerals denote the same or similar elements in all figures.

### DETAILED DESCRIPTION OF EMBODIMENTS

The principles and spirits of the present disclosure will be described below with reference to several exemplary embodiments shown in the accompanying drawings. It is to be understood that these specific embodiments are described only to enable those skilled in the art to better understand and realize the present disclosure, rather than to limit the scope of the present disclosure in any way.

As used herein, the term "comprises" or like terms should be appreciated as open-ended terms that mean "comprises, but is not limited to." The term "based on" is to be read as "based at least in part on." The term "one example embodiment" and "the example embodiment" are to be read as "at least one example embodiment." The terms "first," "second," and the like may refer to different or same objects. Other definitions, explicit and implicit, may be comprised below.

As used herein, the term "determining" encompasses a wide variety of actions. For example, "determining" may include operating, computing, processing, deriving, investigating, looking up (e.g., looking up in a table, database, or another data structure), ascertaining, and the like. In addition, "determining" may include receiving (e.g., receiving information), accessing (e.g., accessing data in a memory), and the like. Additionally, "determining" may include parsing, selecting, choosing, establishing, and the like.

As used in the text herein, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit (s) with software/firmware and (ii) any portions of hardware processor (s) with software (including digital signal processor (s), software, and memory (ies) that work together to cause an apparatus, such as an optical communication device or other computing devices, to perform various functions) and (c) hardware circuit (s) and or processor (s), such as a microprocessor (s) or a portion of a microprocessor (s), that requires software (e.g., firmware) for operation, but the software may not be present when it is not needed for operation.

This definition of circuitry applies to all uses of this term in this application, including in any claims. As a further example, as used in this application, the term "circuitry" also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit, or processor integrated circuit, or OLT, or other like integrated circuits in other computing devices.

The term "resource consumer" used herein refers to an apparatus or a device that consumes resources in a communication network. As an example, an example of a resource consumer may include an apparatus or device of an enterprise or an individual that has a demand for services but cannot provide resources or cannot provide sufficient resources to provide services.

The term "service provider device" as used herein refers to an apparatus or a device to which the resource consumer sends a request for a service. In a communication network, the service provider device may directly provide resources for the resource consumer's service, or the service provider device may rent resources of other devices to provide the resource consumer with the service.

As used herein, the term "computing device" refers to an apparatus or a device capable of providing resources for the services of resource consumers in a communication network. As an example, examples of the computing device or computing apparatus may include devices or apparatuses of telecom operators, devices or apparatuses of the internet or cloud companies, devices or apparatuses of individuals, and the like.

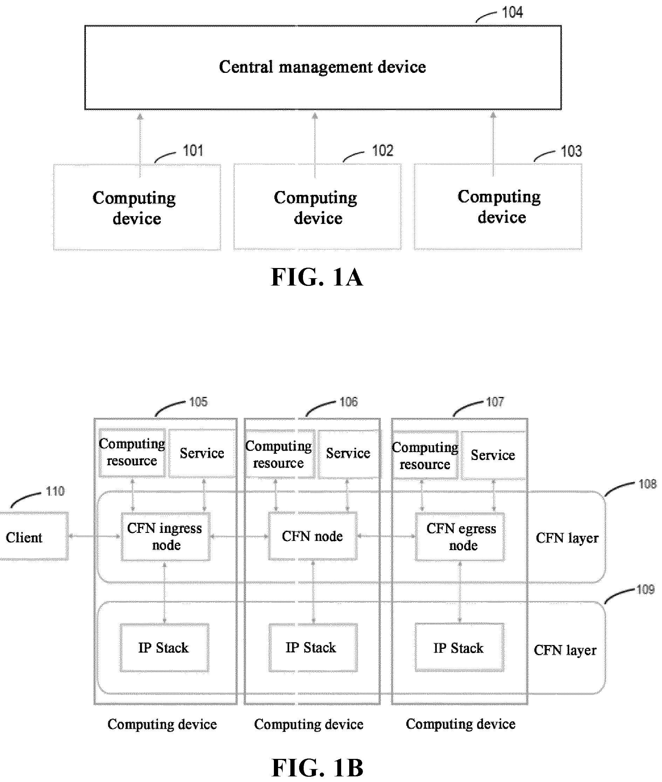

As mentioned above, under the general trend of the convergence of the network and computation, the high collaboration between the network and computation is required. Therefore, achieving reasonable service deployment and resource management is an important aspect to improve network performance. In terms of network resource management and service deployment, two different methods of service provisions have been proposed, namely, a method of centralized service provision and a method of distributed service provision, which will be discussed in detail with reference to FIG 1A and FIG 1B.

FIG 1A illustrates a schematic diagram of a method of centralized service provision. As shown in FIG 1A, computing resources of computing devices 101-103 are jointly scheduled by a central management device 104. An independent resource daemon tool is installed on each computing device to provide additional computing/storage resources. Therefore, computing devices may serve as potential resource providers. The resource daemon tool, for example, periodically collects the resource status of the computing devices and reports the resource status to a central management device 104. The resource status may include for example a computing load, deployed/running service conditions, and the like. Accordingly, the central management device 104 manages resource scheduling and related network configuration based on the resource status reported by all computing devices 101-103.

However, such a method of centralized service provision requires all computing devices 101-103 to periodically report their resource status to the central management device 104, which will cause a huge signaling overhead. In addition, such a method of centralized service provision requires a static/semi-static physical deployment location. Therefore, for a specific service, dynamic deployment among computing devices geographically distributed at different locations cannot use the same destination internet protocol (IP) address as a common service entry, which is only applicable to the cloud environment. Additionally, such a method of centralized service provision is only applicable to a single operator. When the computing devices that provide resources come from multiple different operators, it will be difficult to achieve the reporting and management of the unified resource status information.

In addition, a computing first network (CFN) framework is presented as a network model of dynamic, distributed computing and deep integration of the network. FIG 1B illustrates a schematic diagram of such a method of distributed service provision. FIG 1B shows a resource provisioning platform consisting of three computing devices 105-107. The CFN layer 108 may optionally be placed above or below a traditional IP layer 109.

The CFN layer 108 shown in FIG 1B is used for joint management of computing resources and services among the computing devices. For example, the CFN layer 108 can obtain and maintain the computing resources and service status of the computing devices themselves. The CFN layer 108 may also run a service-oriented routing protocol and generate a corresponding routing/forwarding table. The CFN layer 108 may dynamically select the computing device that can provide optimal service to provide the service based on the request from the client 110, and perform related forwarding actions to notify the computing device to provide the service. Optionally, the CFN layer may run a resource discovery protocol to exchange the status of the computing resources and services among the network. Alternatively, an IP layer protocol such as an extended Border Gateway Protocol (BGP) or Segment Routing (SRv6) may be extended to exchange the above information.

Such a method of distributed service provision still has some obvious drawbacks. For example, such distributed resource management may generate a huge signaling overhead. The resource/service status information of the respective computing device needs to be frequently broadcast and forwarded in the entire network, so the process of resource discovery and information exchange will cause a huge signaling overhead to the entire network. In addition, such a type of computing devices supporting distributed resource management cannot directly communicate with traditional IP devices. A dedicated gateway is required to perform protocol conversion and interconnection between the two types of devices. In addition, such a type of devices supporting the distributed resource management cannot be upgraded individually, and all computing devices in the entire network must be upgraded together to enable interaction between the computing devices.

It can be seen that the traditional methods of service provision all inevitably cause a huge signaling overhead. At present, there is no effective method for achieving reasonable network resource management and service deployment for a service.

Embodiments of the present disclosure propose a solution for service provision. In this solution, a request for a service from a client is received by a computing device. In turn, the computing device obtains an identifier of the service. The identifier of the service is associated with at least one of: a destination internet protocol address of the service, a destination port of the service, and an application layer identifier of the service. For example, the computing device may generate the identifier of the service based on at least one of the above items, add the identifier of the service to the request and then send the updated request to the next-hop computing device. For example, the computing device may receive a request from a previous-hop computing device and obtain the identifier of the service from the request. Then, the computing device determines whether the client can be served based on the identifier of the service.

A service-oriented addressing manner may be achieved in the deployment phase by deploying relevant service instances at computing devices on an IP address-based path from the client to the service provider device, and based on the identifier of the service which is generated and added into the request. This solution may greatly reduce the signaling overhead and improve transmission efficiency. Furthermore, this solution is compatible with the traditional IP-based addressing manner and may be applied in various scenarios.

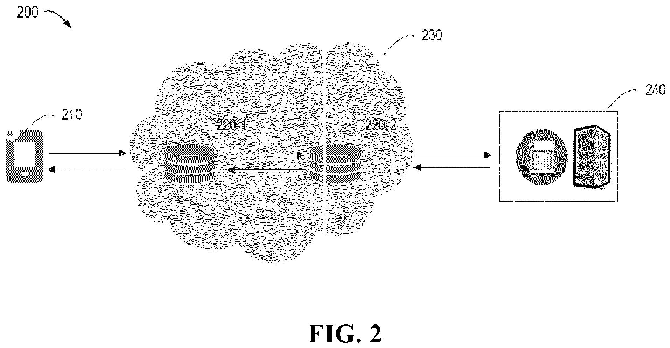

FIG 2 illustrates an example environment 200 in which embodiments of the present disclosure may be implemented. As shown in FIG 2, the example environment 200 comprises a client 210, which may be a computer, a virtual machine, a smartphone, or the like. The example environment 200 also comprises computing devices 220-1 and 220-2 (hereinafter collectively referred as 220 for ease of discussion). An example of the computing device 220 may be a computing power device. The computing devices 220-1 and 220-2 make up a network 230. An example of the network 230 may be a computing power network. The network 230 may be a network via a wired or wireless medium. The example environment 200 also comprises a service provider device 240 for the service requested by the client 210.

The client 210 and the computing device 220 may communicate with each other in a wired and/or wireless manner. The computing device 220 and the service provider device 240 may communicate with each other in a wired and/or wireless manner. Any communication manner, currently known or developed in the future, may be used herein, and the scope of the present disclosure is not limited in this regard.

It should be appreciated that the environment 200 shown in FIG 2 is only exemplary and should not constitute any limitation on the functions and scope of the implementations described in the present disclosure. The numbers of the client, computing devices, and service provider devices shown in FIG 2 are given for purposes of illustration. The environment 200 may include any suitable number of clients, computing devices, and service provider devices. For example, the environment 200 may include additional devices in communication with the client 210, the computing device 220, and service provider device 240.

In some example embodiments, a request for a service from client 210 is received by the computing device 220. For example, the computing device 220-1 may receive the request directly from the client 210. The computing device 220-2 may receive the request from a previous-hop computing device, e.g., the computing device 220-1. Then, the computing device 220 obtains the identifier of the service, and determines whether the service is able to be provided for the client 210 based on the identifier of the service. The identifier of the service is associated with at least one of a destination internet protocol address of the service, a destination port of the service, and an application layer identifier of the service.

For example, the computing device 220-1 may generate the identifier of the service based on at least one of the destination internet protocol address of the service, the destination port of the service, and the application layer identifier of the service. The computing device 220-1 may determine whether the service is able to be provided to the client 210 based on the identifier of the service. If the computing device 220-1 determines that the service is able to be provided to the client 210, the computing device 220-1 provides the service to the client 210 locally. If the computing device 220-1 determines that the service is unable to be provided to the client 210, the computing device 220-1 adds the identifier of the service to the request to update the request, and sends the updated request to the next-hop computing device, for example the computing device 220-2. It should be appreciated that the operation of adding the identifier of the service to the request is only inserting the identifier of the service in an internet protocol data packet header, without making any modification to the traditional internet protocol routing protocol, so the request can still perform the traditional IP-based routing addressing according to the destination internet protocol address.

Then, the computing device 220-2 may receive the request from the computing device 220-1, and obtain the identifier of the service from the request. The computing device 220-2 may determine whether the service is able to be provided to the client 210 based on the identifier of the service. If the computing device 220-2 determines that the service is able to be provided to the client 210 based on the obtained identifier of the service, the computing device 220-2 provides the service to the client 210 locally. If the computing device 220-2 determines that the service is unable to be provided to the client 210, the computing device 220-2 continues to send the request to the next-hop node. If all computing devices in the network 230 are unable to provide the service to the client 210, the request will be finally sent to the service provider device 240 to provide the service.

In the service deployment phase, i.e., in a case where the request from the client 210 is an initial request for the service, after receiving the request for the service, the computing device 220-1 determines the identifier of the service in a similar manner as described above, and adds the identifier of the service to the request. For example, the computing device 220-1 may also update the request by adding, to the request, information about a resource at the computing device 220-1 available to provide the service, and send the request towards the service provider device 240. Correspondingly, the computing device 220-2 receives the request, and updates the request by adding, to the request, information about the resource at the computing device 220-2 available to provide the service, and sends the request to the service provider device 240. The service provider device 240 selects a computing device for providing the service from all computing devices based on the information obtained from the request about the resource at all computing devices available to provide the services. The service provider device 240 may then send the selected computing device an instruction to provide the service. Accordingly, the selected computing device may locally deploy a service instance for the service to provide the service when a subsequent request for the service arrives.

It should be appreciated that the network 230 may include additional traditional devices that only support the IP-based addressing and do not support the functions implemented by the above-mentioned technical devices. That is, there might be one or more additional devices that only support the traditional IP-based addressing, between the client 210 and the computing device 220-1, between the computing device 220-1 and the computing device 220-2, between the computing device 220-2 and the service provider device 240. In this case, such devices that only support the IP-based addressing may forward a messages from the previous-hop computing device to the next-hop computing device, which only requires the provision of an operation of the traditional IP-based addressing.

In addition, it should be appreciated that during service provision, if the service-based addressing manner fails because, for example, the computing device 220-1 fails to generate the identifier of the service, or all service nodes cannot provide services for the client 210, or the network 230 further comprises traditional internet protocol devices that only support the ID addressing, the service provision process will not be terminated. In other words, even if the service-based addressing manner fails, the request from the client 210 may still reach the service provider device 240 in the IP-based addressing manner, and then the service provider device 240 implements the provision of the service.

In this way, dual addressing, namely, the service-based addressing and then IP-based addressing, may be implemented. During the service provision, frequent signaling interaction between the device and the network or between devices is avoided, signaling overhead is greatly reduced, and transmission efficiency is improved. In addition, the solution remains compatible with the traditional IP routing protocol and may be applied in various scenarios. In addition, this solution does not require all computing devices to upgrade the stack together. Since any computing device is compatible with the traditional IP protocol and user equipment, a single traditional IP-based addressing device may be enabled to be upgraded to a computing device that may perform the above operations.

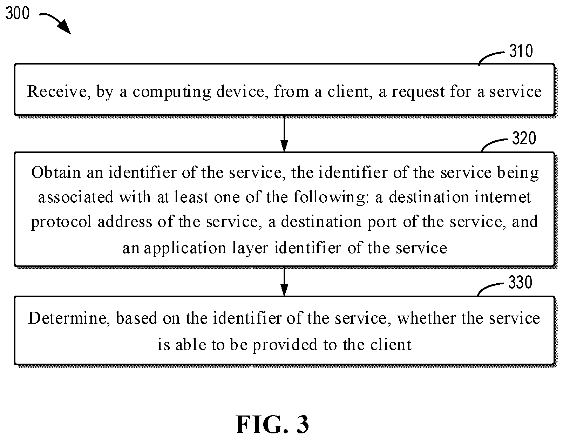

FIG 3 illustrates a flowchart of an example method of service provision 300 according to some embodiments of the present disclosure. For example, the method 300 may be performed by the computing device 220 as shown in FIG 2. It should be appreciated that the method 300 may also be performed by other devices, and the scope of the present disclosure is not limited in this respect. It should also be appreciated that method 300 may also include additional acts not shown and/or that shown acts may be omitted, and that the scope of the present disclosure is not limited in this respect.

As shown in FIG 3, at block 310, the computing device 220 receives a request for a service from client 210. The destination internet protocol address of the request is set as the service provider device 240. Therefore, for example, it is possible to determine to which next-hop computing device the request from the client 210 is forwarded by addressing based on the IP address that can be parsed from the request by domain parsing. For example, the computing device 220-1 may receive the request directly from the client 210. The computing device 220-2 may receive the request from computing device 220-1.

At block 320, the computing device 220 obtains an identifier of the service. The identifier of the service is associated with at least one of a destination internet protocol address of the service, a destination port of the service, and an application layer identifier of the service. For example, the computing device 220-1 may generate the identifier of the service based on at least one of the destination internet protocol address of the service, the destination port of the service, and the application layer identifier of the service. For example, the request received by the computing device 220-2 from the computing device 220-1 may comprise the identifier of the service, and accordingly, the computing device 220-2 may directly obtain the identifier of the service from the request.

In some embodiments, the computing device 220 may maintain a library that records a set of identifiers of services that can be supported by it. According to the library, the computing device 220 may determine identifiers of all service instances that have been deployed on it. For example, the library may be implemented as a local service table (LST).

In some embodiments, the computing device 220 may determine whether the request is an initial request for a service. For example, if the computing device 220 determines that the request is the initial request for the service, which indicates that the service instance for the service has not yet been deployed, the computing device 220 accordingly performs an action in the deployment phase, which will be described in detail below. If the computing device 220 determines that the request is not the initial request for the service, this indicates that the service instance for the service has been previously deployed. Accordingly, the computing device 220 may determine whether the service is able to be provided to client 210 based on the identifier of the service, as will be discussed in detail below.

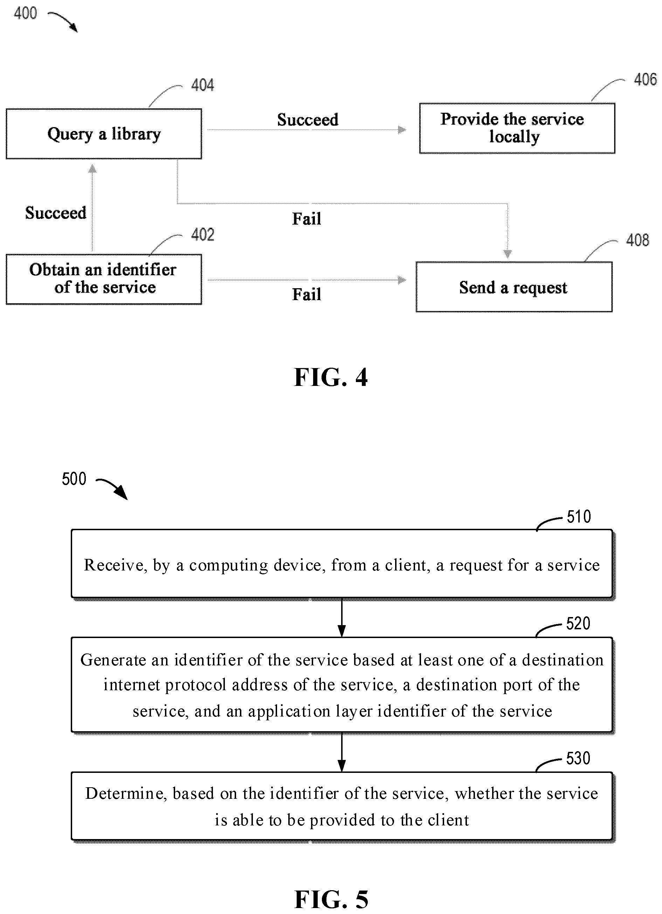

At block 330, the computing device 220 determines whether the service is able to be provided to the client 210 based on the identifier of the service. For example, the computing device 220 may determine whether the service is able to be provided to the client 210 by querying the library with the obtained identifier of the service. This process will be discussed in detail below with reference to FIG. 4.

FIG 4 illustrates an example process of service provision determination according to some embodiments of the present disclosure. As shown in FIG 4, at 402, the computing device 220 performs a process of obtaining the identifier of the service. If the obtaining process is successful, then at 404 the computing device 220 queries the library with the obtained identifier of the service. For example, if the library comprises the identifi, i.e., the query process is successful, the computing device 220 may determine that it can provide service to the client 210, and then at 406, the computing device 220 provides the service to the client 210 locally.

If the library does not comprise the identifier of the service, the query process fails, and the computing device 220 cannot provide the service to the client 210. Then, at 408, the computing device 220 may send the request to the next-hop computing device. Alternatively, if the obtaining process fails, the computing device 220 may send the request to the next-hop computing device at 408.

As described above, the next-hop computing device may be determined by addressing based on the internet protocol address. For example, the next-hop computing device may be a device that supports service-based addressing, or a device that only supports the IP-based addressing. Alternatively, if the network 230 only comprises one computing device 220, the next-hop computing device may be the service provider device 240.

Referring back to FIG 3, in some embodiments, if the computing device 220-1 determines that the service is unable to be provided to the client 210, it may update the request by adding the identifier of the service to the request, and send the updated request to the next-hop computing device. The next-hop computing device may perform the process of obtaining the identifier of the service and the service provision determination as stated above. If the next-hop computing device cannot provide the service to the client 210 either, it continues to send the request to its next-hop computing device. If none of the computing devices in the network 230 can provide the service for the client 210, the request will be finally sent to the service provider device 240 to provide the service.

In some embodiments, in the service deployment phase, that is, if the computing device 220 determines that the request is the initial request for the service, it updates the request by adding, to the request, at least information about the resource at the computing device 220 available to provide the service. For example, information about the resource at computing device 220 available to provide the service may comprise available memory, bandwidth, latency, resource price, etc. As an example, such information may be added to an extended internet protocol version 6 (IPv6) protocol stack. The computing device 220 may then send the updated request towards the service provider device 240. For example, the computing device 220-1 may update the request by adding, to the request, the identifier of the service and information about the resource, and send the updated request towards the service provider device 240.

In some embodiments, the computing device 220 may receive an instruction to provide the service from the service provider device 240. Correspondingly, the computing device 220 may locally deploy a service instance for the service, and add the identifier of the service to the maintained library for recording the identifiers of the services that can be supported by it. Then, the computing device 220 may provide the service to the client 210 locally when a subsequent request for the service comes.

FIG 5 illustrates a flowchart of an example method 500 implemented at a computing device according to some embodiments of the present disclosure. For example, the method 500 may be performed by the computing device 220-1 as shown in FIG 2. It should be appreciated that the method 500 may also be performed by other devices, and the scope of the present disclosure is not limited in this respect. It should also be understood that method 500 may also include additional acts that are not shown and/or that shown acts may be omitted, and that the scope of the present disclosure is not limited in this respect.

As shown in FIG 5, at block 510, the computing device 220-1 receives a request for a service from the client 210.

Next, at block 520, the computing device 220-1 generates the identifier of the service based on at least one of: a destination internet protocol address of the service, a destination port of the service, and an application layer identifier of the service. For example, the computing device 220-1 may generate the identifier of the service based on a mapping relationship between the identifier of the service and at least one of the destination internet protocol address of the service, the destination port of the service, and the application layer identifier of the service. The mapping relationship may be determined in any manner, which is not limited in the embodiments of the present disclosure.

At block 530, the computing device 220-1 determines whether the service is able to be provided to the client 210 based on the generated identifier of the service. For example, the computing device 220-1 may determine whether the service is able to be provided to the client 210 by querying the library with the generated identifier of the service. If the library comprises the identifier of the service, the computing device 220-1 may determine that the service is able to be provided to the client 210. If the library does not include the identifier of the service, the computing device 220-1 may determine that the service is unable to be provided to the client 210. Then, the computing device 220-1 may update the request by adding the identifier of the service to the request. The computing device 220-1 may send the updated request to the next-hop computing device.

In some embodiments, in the deployment phase, that is, if the computing device 220-1 determines that the request is the initial request for the service, it updates the request by adding, to the request, the identifier of the service and information about the resource at the computing device 220-1 available to provide the service. The computing device 220 may then send the updated request towards the service provider device 240. For example, the computing device 220-1 may receive an instruction to provide the service from the service provider device 240. Correspondingly, the computing device 220-1 may locally deploy a service instance for the service, and add the identifier of the service to the maintained library for recording the identifiers of the services that can be supported by it. Then, the computing device 220-1 may provide the service to the client 210 locally when a subsequent request for the service comes.

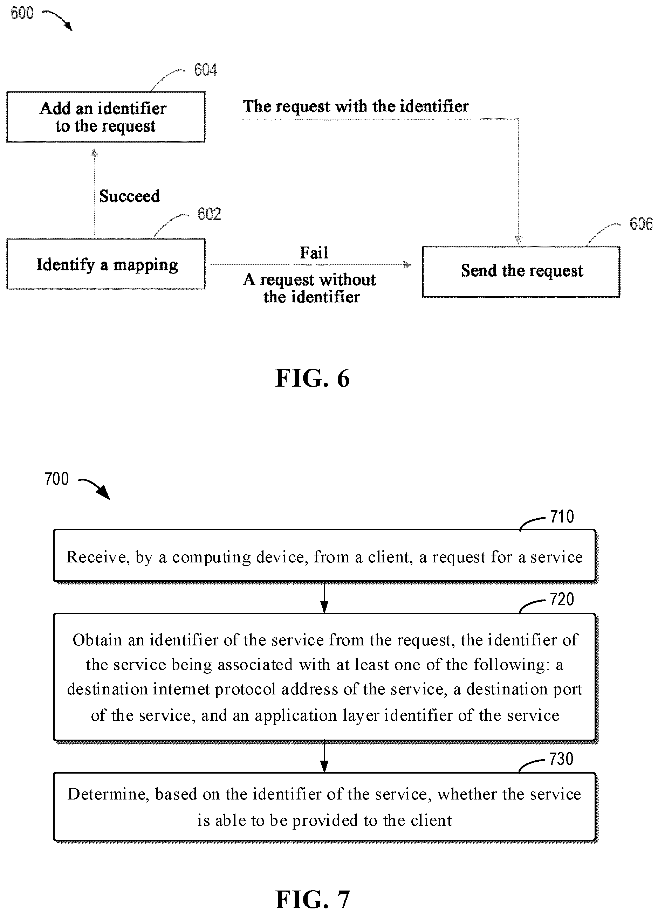

An example process 600 of generating the identifier of the service will be specifically described below with reference to FIG 6. As shown in FIG 6, at 602, the computing device 220-1 performs a mapping process of the identifier of the service. For example, the computing device 220-1 may perform a mapping process for the identifier of the service based on the mapping relationship between the identifier of the service and at least one of the destination internet protocol address of the service, the destination port of the service, and the application layer identifier of the service.

If the mapping process is successful, the computing device 220-1 may successfully generate the identifier of the service. The computing device 220-1 may then determine whether the service is able to be provided to the client 210 based on the generated identifier of the service. For example, if the computing device 220-1 determines that the service is able to be provided to the client 210, the computing device 220-1 provides the service to the client 210 locally. If it is determined that the service is unable to be provided to the client 210, the computing device 220-1 adds the identifier to the request at 604. Then, at 606, the computing device 220-1 sends a request with the identifier to the next-hop computing device.

If the mapping process fails, the computing device 220-1 cannot generate the identifier of the service, and then at 606 the computing device 220-1 may send the request without the identifier to the next-hop computing device. This means that the service-based addressing manner fails. Therefore, for the request of the client 210, the provision of the service can only be performed in the traditional IP-based addressing manner.

FIG 7 illustrates a flowchart of an example method 700 implemented at a computing device according to some embodiments of the present disclosure. For example, the method 700 may be performed by the computing device 220-2 as shown in FIG 2. It should be appreciated that the method 700 may also be performed by other devices, and the scope of the present disclosure is not limited in this respect. It should also be appreciated that the method 700 may also include additional acts not shown and/or that shown acts may be omitted, and that the scope of the present disclosure is not limited in this respect.

As shown in FIG 7, at block 710, the computing device 220-2 receives a request for a service from the client 210. For example, the computing device 220-2 may receive the request from a previous-hop computing device, e.g., the computing device 220-1. In some embodiments, the received request may include an identifier of the service.

At block 720, the computing device 220-2 obtains the identifier of the service from the request. The identifier of the service is associated with at least one of a destination internet protocol address of the service, a destination port of the service, and an application layer identifier of the service.

At block 730, the computing device 220-2 determines whether the service is able to be provided to the client 210 based on the identifier of the service. For example, the computing device 220-2 may determine whether the service is able to be provided to the client 210 by querying a library with the obtained identifier of the service. For example, if the library comprises the identifier of the service, the computing device 220-2 may determine that the service is able to be provided to the client 210, and the computing device 220-2 provides the service to the client 210 locally. Otherwise, if the library does not comprise the identifier of the service, the computing device 220-2 may determine that the service is unable to be provided to the client 210. Then, the computing device 220-2 may send the request to the next-hop computing device.

In some embodiments, in the deployment phase, that is, if the computing device 220-2 determines that the request is the initial request for the service, it updates the request by adding, to the request, the identifier of the service and information about the resource at the computing device 220-2 available to provide the service. Then, the computing device 220-2 may send the updated request towards the service provider device 240. For example, the computing device 220-2 may receive an instruction to provide the service from the service provider device 240. Correspondingly, the computing device 220-2 may locally deploy a service instance for the service, and add the identifier of the service to the maintained library for recording the identifiers of the services that can be supported by it. Then, the computing device 220-2 may provide the service to the client 210 locally when a subsequent request for the service comes.

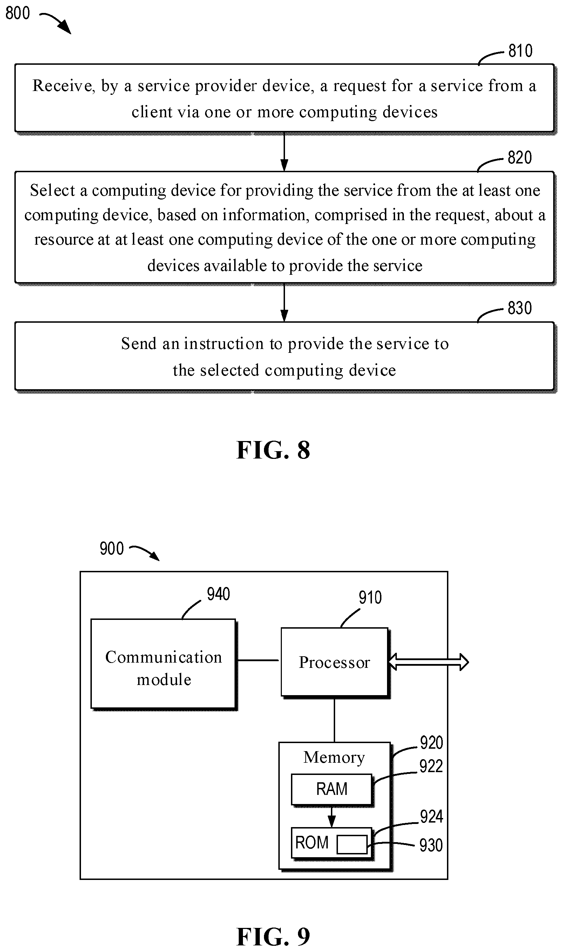

FIG 8 illustrates a flow chart of an example method 800 of service provision according to some embodiments of the present disclosure. For example, the method 800 may be performed by the service provider device 240 as shown in FIG 2. It should be appreciated that the method 800 may also be performed by other devices, and the scope of the present disclosure is not limited in this regard. It should also be appreciated that the method 800 may also include additional acts not shown and/or that shown acts may be omitted, and that the scope of the present disclosure is not limited in this respect.

As shown in FIG 8, at block 810, the service provider device 240 receives a request for a service from the client 210 via one or more computing devices. For example, the request may include information about a resource at at least one computing device of the one or more computing devices available to provide the service. For example, the service provider device 240 may receive the request for the service from the client 210 via the computing devices 220-1 and 220-2.

At block 820, the service provider device 240 selects a computing device for providing the service from at least one computing device, based on the information comprised in the request about a resource at at least one computing device of the one or more computing devices available to provide the service. For example, the service provider device 240 may select a computing device for providing the service from at least one computing device, based on network status and price factor etc. comprised in the information about the resource, and for example, based on service quality requirements.

In some embodiments, the service provider device 240 may negotiate with a party to which the computing device 220 belongs. If the negotiation is successful, the service provider device 240 may deploy a service instance for the service on the computing device 220. For example, if the party to which the computing device 220 belongs is a traditional telecommunications operator, the service provider device 240 may negotiate with a central management system. The central management system for example may be an operation/business support system (OSS/BSS). Alternatively, if the party to which the computing device 220 belongs is another third party, the service provider device 240 may negotiate with other resource transaction platforms (for example, a blockchain transaction platform).

Then, at block 830, the service provider device 240 sends an instruction to provide the service to the selected computing device. Accordingly, the selected computing device may receive the instruction and deploy a service instance for the service to provide the service to the client 210 locally.

FIG 9 is a simplified block diagram of an device 900 suitable for implementing embodiments of the present disclosure. The device 900 may be provided to implement a communication device, such as the client 210, the computing device 220 and the service provider device 240 as shown in FIG 2. As shown, the device 900 comprises one or more processors 910, one or more memories 940 coupled to the processors 910, and one or more transmitters and/or receivers (TX/RX) 940 coupled to the processor 910.

The TX/RX 940 is used for two-way communication. The TX/RX 940 has at least one antenna to facilitate communication. A communication interface may represent any interface requisite for communication with other network elements.

The processor 910 may be of any type suitable for a local technical network, and may include, but is not limited to, one or more of a general-purpose computer, a dedicated computer, a microcontroller, a digital signal controller (DSP), and a controller-based multi-core controller architecture. The device 900 may have multiple processors, such as an application specific integrated circuit chip, which is time-slaved to a clock synchronous with a main processor.

The memory 920 may include one or more non-volatile memories and one or more volatile memories. Examples of the non-volatile memory include, but are not limited to, Read-Only Memory (ROM), Erasable Programmable Read-Only Memory (EPROM), flash memory, hard drive, Compact Disc (CD), Digital Video Disc (DVD), and other magnetic storage and/or optical storage. Examples of the volatile memory include, but are not limited to, Random Access Memory (RAM) 922 and other volatile memory that does not persist for the duration of a power outage.

The computer program 930 comprises computer-executable instructions executed by an associated processor 910. The program 930 may be stored in the ROM 920. The processor 910 may perform any suitable action and process by loading the program 930 into the RAM 920.

Embodiments of the present disclosure may be implemented by virtue of the program 930 such that the device 900 may perform any process of the present disclosure as discussed with reference to FIG 2 through FIG 8. Embodiments of the present disclosure may also be implemented by hardware or by a combination of software and hardware.

In some example embodiments, the program 930 may be tangibly contained in a computer-readable storage medium that may be included in the device 900 (e.g., in the memory 920) or other storage devices accessible by the device 900. The program 930 may be loaded from the computer-readable storage medium into RAM 922 for execution. The computer-readable storage medium may include any type of tangible non-volatile memory such as ROM, EPROM, flash memory, hard drive, CD, DVD, etc.

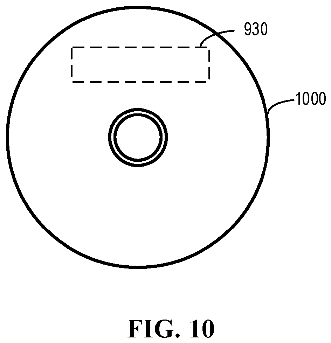

FIG 10 illustrates an example of a computer-readable storage medium 1000 in the form of a CD or DVD. The program 930 is stored on the computer-readable storage medium.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination there.

The present disclosure also provides at least one computer program product tangibly stored on a non-transitory computer readable storage medium. The computer program product comprises computer-executable instructions, such as those included in program modules, being executed in a device on a target real or virtual processor, to carry out the method 300, 500, 700 and 800 as described above with reference to FIG 3, FIG 5, FIG 7 and FIG 8. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like. Examples of signals may include electrical, optical, radio, sound, or other forms of propagated signals, such as carrier waves, infrared signals, etc.

The computer readable storage medium may be any tangible medium comprising or storing a program used for or related to an instruction execution system, apparatus, or device. The computer readable storage medium may be a computer readable signal medium or a computer readable storage medium. A computer readable storage medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. Conversely, the steps depicted in the flowcharts may be performed in an altered order. Additionally or alternatively, some steps may be omitted, multiple steps may be combined into one step for execution, and/or one step may be divided into multiple steps for execution. It should also be noted that the features and functions of two or more devices according to the present disclosure may be embodied in one device. Conversely, the features and functions of one device described above may be further divided and embodied by a plurality of devices.

While the present disclosure has been described with reference to several specific embodiments, it is to be understood that the disclosure is not limited to the disclosed specific embodiments. The present disclosure is intended to cover various modifications and equivalent arrangements included within the scope of the appended claims.

## Claims

1. A method of service provision, comprising:
receiving (310), by a computing device, from a client, a request for a service;
obtaining (320) an identifier of the service, the identifier of the service being associated with at least one of the following: a destination internet protocol address of the service, a destination port of the service, and an application layer identifier of the service; and
determining (330), based on the identifier of the service, whether the service is able to be provided to the client, wherein determining (330) whether the service is able to be provided to the client comprises:
determining whether the request is an initial request for the service; and
if it is determined that the request is a non-initial request for the service, determining, based on the identifier of the service, whether the service is able to be provided to the client, wherein the method further comprises:
if it is determined that the request is the initial request for the service, updating the request by adding, to the request, at least information about a resource at the computing device available to provide the service; and
sending the updated request towards a service provider device.

2. The method of claim **1,** wherein the request is received from the client, and obtaining (320) the identifier of the service comprises:
generating the identifier of the service based on at least one of the destination internet protocol address of the service, the destination port of the service, and the application layer identifier of the service.

3. The method of claim 2, further comprising:
if it is determined that the service fails to be provided to the client, updating the request by adding the identifier of the service to the request; and
sending the updated request to a next-hop computing device.

4. The method of claim 3, wherein the next-hop computing device is determined by addressing based on an internet protocol address.

5. The method of claim 1, wherein the request is received from a previous-hop computing device, and obtaining the identifier of the service comprises:
obtaining the identifier of the service from the request.

6. The method of any of claims 1-5, wherein the determining whether the service is able to be provided to the client comprises:
determining whether the service is able to be provided to the client by querying a library with the identifier of the service, the library recording a set of identifiers of services that are able to be supported by the computing device.

7. The method of claim 1, wherein the request is received from the client, and updating the request comprises:
updating the request by adding, to the request, the identifier of the service and information about the resource.

8. The method of claim 1 or 7, further comprising:
receiving an instruction to provide the service from the service provider device;
deploying a service instance for the service; and
adding the identifier of the service to a library for recording identifiers of services that are able to be supported by the computing device.

9. A method of service provision, comprising:
receiving (810), by a service provider device, a request for a service from a client via one or more computing devices available to provide the service;
selecting (820) a computing device for providing the service from the at least one computing device, based on information added to the request by at least one of the one or more computing devices available to provide the service, about a resource at the at least one computing device of the one or more computing devices available to provide the service; and
sending (830) an instruction to provide the service to the selected computing device.

10. An apparatus (900) for service provision, comprising:
at least one processor (910); and
at least one memory (920) coupled to the at least one processor (910), the at least one memory (920) comprising instructions (930) stored therein, the at least one memory (920) and the instructions (930) further configured to, together with the at least one processor (910), cause the apparatus (900) to:
receive (310), by the apparatus, from a client, a request for a service;
obtain (320) an identifier of the service, the identifier of the service being associated with at least one of the following: a destination internet protocol address of the service, a destination port of the service, and an application layer identifier of the service; and
determine (330), based on the identifier of the service, whether the service is able to be provided to the client, wherein determining (330) whether the service is able to be provided to the client comprises:
determining whether the request is an initial request for the service; and
if it is determined that the request is a non-initial request for the service, determining, based on the identifier of the service, whether the service is able to be provided to the client, wherein the method further comprises:
if it is determined that the request is the initial request for the service, updating the request by adding, to the request, at least information about a resource at the computing device available to provide the service; and
sending the updated request towards a service provider device.

11. The apparatus (900) of claim 10, wherein the request is received from the client, and the at least one memory and the instructions are further configured to, together with the at least one processor, cause the apparatus to obtain the identifier of the service by:
generating the identifier of the service based on at least one of the destination internet protocol address of the service, the destination port of the service, and the application layer identifier of the service,
wherein for example the at least one memory and the instructions are further configured to, together with the at least one processor, cause the apparatus to:
if it is determined that the service fails to be provided to the client, update the request by adding the identifier of the service to the request; and
send the updated request to a next-hop computing device,
wherein for example the next-hop computing device is determined by addressing based on an internet protocol address.

12. The apparatus (900) of claim 10, wherein the request is received from a previous-hop computing device, and the at least one memory and the instructions are further configured to, together with the at least one processor, cause the apparatus to obtain the identifier of the service by:
obtaining the identifier of the service from the request.

13. The apparatus (900) of any of claims 10-12, wherein the at least one memory and the instructions are further configured to, together with the at least one processor, cause the apparatus to determine whether the service is able to be provided to the client by:
determining whether the service is able to be provided to the client by querying a library with the identifier of the service, the library recording a set of identifiers of services that are able to be supported by the computing device.

14. The apparatus (900) of claim 10, wherein the at least one memory and the instructions are further configured to, together with the at least one processor, cause the apparatus to determine whether the service is able to be provided to the client by:
determining whether the request is an initial request for the service; and
if it is determined that the request is a non-initial request for the service, determining, based on the identifier of the service, whether the service is able to be provided to the client,
wherein for example the at least one memory and the instruction are further configured to, together with the at least one processor, cause the apparatus to:
if it is determined that the request is the initial request for the service, update the request by adding, to the request, at least information about a resource at the computing device available to provide the service; and
send the updated request towards a service provider device,
wherein for example the request is received from the client, and the at least one memory and the instructions are further configured to, together with the at least one processor, cause the apparatus to update the request by:
updating the request by adding, to the request, the identifier of the service and the information about the resource.

15. The apparatus (900) of claim 14, wherein the at least one memory and the instructions are further configured to, together with the at least one processor, cause the apparatus to:
receive an instruction to provide the service from the service provider device;
deploying a service instance for the service; and
adding the identifier of the service to a library for recording identifiers of the services that are able to be supported by the computing device.

16. An apparatus (900) for service provision, comprising:
at least one processor; and
at least one memory coupled to the at least one processor, the at least one memory comprising instructions stored therein, the at least one memory and the instructions further configured to, together with the at least one processor, cause the apparatus to:
receive, by the apparatus, a request for a service from a client via one or more computing devices available to provide the service;
select a computing device for providing the service from the at least one computing device, based on information added to the request by at least one of the one or more computing devices available to provide the service, about a resource at the at least one computing device of the one or more computing devices available to provide the service; and
send an instruction to provide the service to the selected computing device.

17. A device for service provision, comprising:
means for receiving, by the device, from a client, a request for a service;
means for obtaining an identifier of the service, the identifier of the service being associated with at least one of the following: a destination internet protocol address of the service, a destination port of the service, and an application layer identifier of the service; and
means for determining, based on the identifier of the service, whether the service is able to be provided to the client, wherein determining (330) whether the service is able to be provided to the client comprises:
determining whether the request is an initial request for the service; and
if it is determined that the request is a non-initial request for the service, determining, based on the identifier of the service, whether the service is able to be provided to the client, wherein the method further comprises:
if it is determined that the request is the initial request for the service, updating the request by adding, to the request, at least information about a resource at the computing device available to provide the service; and
sending the updated request towards a service provider device.

18. A device for service provision, comprising:
means for receiving, by the device, a request for a service from a client via one or more computing devices available to provide the service;
means for selecting a computing device for providing the service from the at least one computing device, based on information added to the request by at least one of the one or more computing devices available to provide the service, about a resource at the at least one computing device of the one or more computing devices available to provide the service; and
means for sending an instruction to provide the service to the selected computing device.

19. A computer readable storage medium storing a computer code thereon, the computer code being configured to, when executed, cause an apparatus to perform the method of any of claims 1-8 or 9.

## Patentansprüche

1. Verfahren zur Dienstbereitstellung, das Folgendes umfasst:
Empfangen (310) einer Anforderung eines Dienstes durch eine Datenverarbeitungsvorrichtung von einem Client;
Erhalten (320) einer Kennung des Dienstes, wobei die Kennung des Dienstes mit mindestens einem von Folgendem verknüpft ist: einer Zielinternetprotokolladresse des Dienstes, einem Zielport des Dienstes und einer Anwendungsschichtkennung des Dienstes; und
Bestimmen (330) auf Basis der Kennung des Dienstes, ob der Dienst dem Client bereitgestellt werden kann, wobei das Bestimmen (330), ob der Dienst dem Client bereitgestellt werden kann, Folgendes umfasst:
Bestimmen, ob die Anforderung eine anfängliche Anforderung des Dienstes ist; und
wenn bestimmt wird, dass die Anforderung keine anfängliche Anforderung des Dienstes ist, Bestimmen auf Basis der Kennung des Dienstes, ob der Dienst dem Client bereitgestellt werden kann, wobei das Verfahren ferner Folgendes umfasst:
wenn bestimmt wird, dass die Anforderung die anfängliche Anforderung des Dienstes ist, Aktualisieren der Anforderung durch Hinzufügen mindestens von Informationen über eine Ressource an der Datenverarbeitungsvorrichtung, die zum Bereitstellen des Dienstes verfügbar ist, zur Anforderung; und
Senden der aktualisierten Anforderung an eine Dienstanbietervorrichtung.

2. Verfahren nach Anspruch 1, wobei die Anforderung vom Client empfangen wird und das Erhalten (320) der Kennung des Dienstes Folgendes umfasst:
Erzeugen der Kennung des Dienstes auf Basis von mindestens einem von der Zielinternetprotokolladresse des Dienstes, des Zielports des Dienstes und der Anwendungsschichtkennung des Dienstes.

3. Verfahren nach Anspruch 2, das ferner Folgendes umfasst:
wenn bestimmt wird, dass der Dienst dem Client nicht bereitgestellt werden kann, Aktualisieren der Anforderung durch Hinzufügen der Kennung des Dienstes zur Anforderung; und
Senden der aktualisierten Anforderung an eine Datenverarbeitungsvorrichtung am nächsten Hop.

4. Verfahren nach Anspruch 3, wobei die Datenverarbeitungsvorrichtung am nächsten Hop durch Adressieren auf Basis einer Internetprotokolladresse bestimmt wird.

5. Verfahren nach Anspruch 1, wobei die Anforderung von einer Datenverarbeitungsvorrichtung eines vorherigen Hops empfangen wird und das Erhalten der Kennung des Dienstes Folgendes umfasst:
Erhalten der Kennung des Dienstes von der Anforderung.

6. Verfahren nach einem der Ansprüche 1 bis 5, wobei das Bestimmen, ob der Dienst dem Client bereitgestellt werden kann, Folgendes umfasst:
Bestimmen, ob der Dienst dem Client bereitgestellt werden kann, durch Abfragen einer Bibliothek mit der Kennung des Dienstes, wobei die Bibliothek einen Satz von Kennungen von Diensten aufzeichnet, die in der Lage sind, von der Datenverarbeitungsvorrichtung unterstützt zu werden.

7. Verfahren nach Anspruch 1, wobei die Anforderung vom Client empfangen wird und das Aktualisieren der Anforderung Folgendes umfasst:
Aktualisieren der Anforderung durch Hinzufügen der Kennung des Dienstes und von Informationen über die Ressource zur Anforderung.

8. Verfahren nach Anspruch 1 oder 7, das ferner Folgendes umfasst:
Empfangen einer Anweisung zum Bereitstellen des Dienstes von der Dienstanbietervorrichtung;
Einsetzen einer Dienstinstanz für den Dienst; und
Hinzufügen der Kennung des Dienstes zu einer Bibliothek zum Aufzeichnen von Kennungen von Diensten, die in der Lage sind, von der Datenverarbeitungsvorrichtung unterstützt zu werden.

9. Verfahren zur Dienstbereitstellung, das Folgendes umfasst:
Empfangen (810) einer Anforderung eines Dienstes durch eine Dienstanbietervorrichtung via eine oder mehrere Datenverarbeitungsvorrichtungen, die in der Lage sind, den Dienst bereitzustellen, von einem Client;
Auswählen (820) einer Datenverarbeitungsvorrichtung zum Bereitstellen des Dienstes von der mindestens einen Datenverarbeitungsvorrichtung, auf Basis von Informationen, die von der mindestens einen der einen oder der mehreren Datenverarbeitungsvorrichtungen zur Anforderung hinzugefügt wurden, die zum Bereitstellen des Dienstes verfügbar sind, über eine Ressource an der mindestens einen Datenverarbeitungsvorrichtung der einen oder der mehreren Datenverarbeitungsvorrichtungen, die zum Bereitstellen des Dienstes verfügbar sind; und
Senden (830) einer Anweisung zum Bereitstellen des Dienstes an die ausgewählte Datenverarbeitungsvorrichtung.

10. Einrichtung (900) zur Dienstbereitstellung, die Folgendes umfasst:
mindestens einen Prozessor (910); und
mindestens einen Speicher (920), der an den mindestens einen Prozessor (910) gekoppelt ist, wobei der mindestens eine Speicher (920) Anweisungen (930) umfasst, die darauf gespeichert sind, wobei der mindestens eine Speicher (920) und die Anweisungen (930) ferner dazu ausgelegt sind, die Einrichtung (900) zusammen mit dem mindestens einen Prozessor (910) zu Folgendem zu veranlassen:
Empfangen (310) einer Anforderung eines Dienstes durch die Einrichtung von einem Client;
Erhalten (320) einer Kennung des Dienstes, wobei die Kennung des Dienstes mit mindestens einem von Folgendem verknüpft ist: einer Zielinternetprotokolladresse des Dienstes, einem Zielport des Dienstes und einer Anwendungsschichtkennung des Dienstes; und
Bestimmen (330) auf Basis der Kennung des Dienstes, ob der Dienst dem Client bereitgestellt werden kann, wobei das Bestimmen (330), ob der Dienst dem Client bereitgestellt werden kann, Folgendes umfasst:
Bestimmen, ob die Anforderung eine anfängliche Anforderung des Dienstes ist; und
wenn bestimmt wird, dass die Anforderung keine anfängliche Anforderung des Dienstes ist, Bestimmen auf Basis der Kennung des Dienstes, ob der Dienst dem Client bereitgestellt werden kann, wobei das Verfahren ferner Folgendes umfasst:
wenn bestimmt wird, dass die Anforderung die anfängliche Anforderung des Dienstes ist, Aktualisieren der Anforderung durch Hinzufügen mindestens von Informationen über eine Ressource an der Datenverarbeitungsvorrichtung, die zum Bereitstellen des Dienstes verfügbar ist, zur Anforderung; und
Senden der aktualisierten Anforderung an eine Dienstanbietervorrichtung.

11. Einrichtung (900) nach Anspruch 10, wobei die Anforderung vom Client empfangen wird und der mindestens eine Speicher und die Anweisungen ferner dazu ausgelegt sind, die Einrichtung zusammen mit dem mindestens einen Prozessor zu veranlassen, die Kennung des Dienstes durch Folgendes zu erhalten:
Erzeugen der Kennung des Dienstes auf Basis von mindestens einem von der Zielinternetprotokolladresse des Dienstes, des Zielports des Dienstes und der Anwendungsschichtkennung des Dienstes,
wobei beispielsweise der mindestens eine Speicher und die Anweisungen ferner dazu ausgelegt sind, die Einrichtung zusammen mit dem mindestens einen Prozessor zu Folgendem zu veranlassen:
wenn bestimmt wird, dass der Dienst dem Client nicht bereitgestellt werden kann, Aktualisieren der Anforderung durch Hinzufügen der Kennung des Dienstes zur Anforderung; und
Senden der aktualisierten Anforderung an eine Datenverarbeitungsvorrichtung am nächsten Hop,
wobei beispielsweise die Datenverarbeitungsvorrichtung am nächsten Hop durch Adressieren auf Basis einer Internetprotokolladresse bestimmt wird.

12. Einrichtung (900) nach Anspruch 10, wobei die Anforderung von einer Datenverarbeitungsvorrichtung eines vorherigen Hops empfangen wird und der mindestens eine Speicher und die Anweisungen ferner dazu ausgelegt sind, die Einrichtung zusammen mit dem mindestens einen Prozessor zu veranlassen, die Kennung des Dienstes durch Folgendes zu erhalten:
Erhalten der Kennung des Dienstes von der Anforderung.

13. Einrichtung (900) nach einem der Ansprüche 10 bis 12, wobei der mindestens eine Speicher und die Anweisungen ferner dazu ausgelegt sind, die Einrichtung zusammen mit dem mindestens einen Prozessor zu veranlassen, durch Folgendes zu bestimmen, ob der Dienst dem Client bereitgestellt werden kann:
Bestimmen, ob der Dienst dem Client bereitgestellt werden kann, durch Abfragen einer Bibliothek mit der Kennung des Dienstes, wobei die Bibliothek einen Satz von Kennungen von Diensten aufzeichnet, die in der Lage sind, von der Datenverarbeitungsvorrichtung unterstützt zu werden.

14. Einrichtung (900) nach Anspruch 10, wobei der mindestens eine Speicher und die Anweisungen ferner dazu ausgelegt sind, die Einrichtung zusammen mit dem mindestens einen Prozessor zu veranlassen, durch Folgendes zu bestimmen, ob der Dienst dem Client bereitgestellt werden kann:
Bestimmen, ob die Anforderung eine anfängliche Anforderung des Dienstes ist; und
wenn bestimmt wird, dass die Anforderung keine anfängliche Anforderung des Dienstes ist, Bestimmen auf Basis der Kennung des Dienstes, ob der Dienst dem Client bereitgestellt werden kann,
wobei beispielsweise der mindestens eine Speicher und die Anweisung ferner dazu ausgelegt sind, die Einrichtung zusammen mit dem mindestens einen Prozessor zu Folgendem zu veranlassen:
wenn bestimmt wird, dass die Anforderung die anfängliche Anforderung des Dienstes ist, Aktualisieren der Anforderung durch Hinzufügen mindestens von Informationen über eine Ressource an der Datenverarbeitungsvorrichtung, die zum Bereitstellen des Dienstes verfügbar ist, zur Anforderung; und
Senden der aktualisierten Anforderung an eine Dienstanbietervorrichtung,
wobei beispielsweise die Anforderung vom Client empfangen wird und der mindestens eine Speicher und die Anweisungen ferner dazu ausgelegt sind, die Einrichtung zusammen mit dem mindestens einen Prozessor zu veranlassen, die Anforderung durch Folgendes zu aktualisieren:
Aktualisieren der Anforderung durch Hinzufügen der Kennung des Dienstes und der Informationen über die Ressource zur Anforderung.

15. Einrichtung (900) nach Anspruch 14, wobei der mindestens eine Speicher und die Anweisungen ferner dazu ausgelegt sind, die Einrichtung zusammen mit dem mindestens einen Prozessor zu Folgendem zu veranlassen:
Empfangen einer Anweisung zum Bereitstellen des Dienstes von der Dienstanbietervorrichtung;
Einsetzen einer Dienstinstanz für den Dienst; und
Hinzufügen der Kennung des Dienstes zu einer Bibliothek zum Aufzeichnen von Kennungen der Dienste, die in der Lage sind, von der Datenverarbeitungsvorrichtung unterstützt zu werden.

16. Einrichtung (900) zur Dienstbereitstellung, die Folgendes umfasst:
mindestens einen Prozessor; und
mindestens einen Speicher, der an den mindestens einen Prozessor gekoppelt ist, wobei der mindestens eine Speicher Anweisungen umfasst, die darauf gespeichert sind, wobei der mindestens eine Speicher und die Anweisungen ferner dazu ausgelegt sind, die Einrichtung zusammen mit dem mindestens einen Prozessor zu Folgendem zu veranlassen:
Empfangen einer Anforderung eines Dienstes durch die Einrichtung via eine oder mehrere Datenverarbeitungsvorrichtungen, die zum Bereitstellen des Dienstes verfügbar sind, von einem Client;
Auswählen einer Datenverarbeitungsvorrichtung zum Bereitstellen des Dienstes von mindestens einer Datenverarbeitungsvorrichtung, auf Basis von Informationen, die von der mindestens einen der einen oder der mehreren Datenverarbeitungsvorrichtungen zur Anforderung hinzugefügt wurden, die zum Bereitstellen des Dienstes verfügbar sind, über eine Ressource an der mindestens einen Datenverarbeitungsvorrichtung der einen oder der mehreren Datenverarbeitungsvorrichtungen, die zum Bereitstellen des Dienstes verfügbar sind; und
Senden einer Anweisung zum Bereitstellen des Dienstes an die ausgewählte Datenverarbeitungsvorrichtung.

17. Vorrichtung zur Dienstbereitstellung, die Folgendes umfasst:
Mittel zum Empfangen einer Anforderung eines Dienstes durch die Vorrichtung von einem Client;
Mittel zum Erhalten einer Kennung des Dienstes, wobei die Kennung des Dienstes mit mindestens einem von Folgendem verknüpft ist: einer Zielinternetprotokolladresse des Dienstes, einem Zielport des Dienstes und einer Anwendungsschichtkennung des Dienstes; und
Mittel zum Bestimmen auf Basis der Kennung des Dienstes, ob der Dienst dem Client bereitgestellt werden kann, wobei das Bestimmen (330), ob der Dienst dem Client bereitgestellt werden kann, Folgendes umfasst:
Bestimmen, ob die Anforderung eine anfängliche Anforderung des Dienstes ist; und
wenn bestimmt wird, dass die Anforderung keine anfängliche Anforderung des Dienstes ist, Bestimmen auf Basis der Kennung des Dienstes, ob der Dienst dem Client bereitgestellt werden kann, wobei das Verfahren ferner Folgendes umfasst:
wenn bestimmt wird, dass die Anforderung die anfängliche Anforderung des Dienstes ist, Aktualisieren der Anforderung durch Hinzufügen mindestens von Informationen über eine Ressource an der Datenverarbeitungsvorrichtung, die zum Bereitstellen des Dienstes verfügbar ist, zur Anforderung; und
Senden der aktualisierten Anforderung an eine Dienstanbietervorrichtung.

18. Vorrichtung zur Dienstbereitstellung, die Folgendes umfasst:
Mittel zum Empfangen einer Anforderung eines Dienstes durch die Vorrichtung via eine oder mehrere Datenverarbeitungsvorrichtungen, die zum Bereitstellen des Dienstes verfügbar sind, von einem Client;
Mittel zum Auswählen einer Datenverarbeitungsvorrichtung zum Bereitstellen des Dienstes von mindestens einer Datenverarbeitungsvorrichtung, auf Basis von Informationen, die von der mindestens einen der einen oder der mehreren Datenverarbeitungsvorrichtungen zur Anforderung hinzugefügt wurden, die zum Bereitstellen des Dienstes verfügbar sind, über eine Ressource an der mindestens einen Datenverarbeitungsvorrichtung der einen oder der mehreren Datenverarbeitungsvorrichtungen, die zum Bereitstellen des Dienstes verfügbar sind; und
Mittel zum Senden einer Anweisung zum Bereitstellen des Dienstes an die ausgewählte Datenverarbeitungsvorrichtung.

19. Computerlesbares Speichermedium, auf dem ein Computercode gespeichert ist, wobei der Computercode dazu ausgelegt ist, wenn er ausgeführt wird, eine Einrichtung zu veranlassen, das Verfahren nach einem der Ansprüche 1 bis 8 oder 9 durchzuführen.

## Revendications

1. Procédé de fourniture de service, comprenant les étapes suivantes :
recevoir (310) d'un client, par un dispositif informatique, une demande pour un service ;
obtenir (320) un identifiant du service, l'identifiant du service étant associé à au moins un des éléments suivants : une adresse IP de destination du service, un port de destination du service et un identifiant de couche d'application du service ; et
sur la base de l'identifiant du service, déterminer (330) si le service peut être fourni au client, dans lequel le fait de déterminer (330) si le service peut être fourni au client comprend ce qui suit :
déterminer si la demande est une demande initiale pour le service ; et
s'il est déterminé que la demande est une demande non initiale pour le service, sur la base de l'identifiant du service, déterminer si le service peut être fourni au client, dans lequel le procédé comprend en outre les étapes suivantes :
s'il est déterminé que la demande est la demande initiale pour le service, mettre à jour la demande en ajoutant à la demande au moins des informations concernant une ressource sur le dispositif informatique disponible pour fournir le service ; et
envoyer la demande mise à jour à un dispositif de fournisseur de service.

2. Procédé selon la revendication 1, dans lequel la demande est reçue du client, et le fait d'obtenir (320) l'identifiant du service comprend ce qui suit :
générer l'identifiant du service sur la base d'au moins un parmi l'adresse IP de destination du service, le port de destination du service et l'identifiant de couche d'application du service.

3. Procédé selon la revendication 2, comprenant en outre les étapes suivantes :
s'il est déterminé que le service ne peut pas être fourni au client, mettre à jour la demande en ajoutant l'identifiant du service à la demande ; et
envoyer la demande mise à jour à un dispositif informatique de saut suivant.

4. Procédé selon la revendication 3, dans lequel le dispositif informatique de saut suivant est déterminé par adressage sur la base d'une adresse IP.

5. Procédé selon la revendication 1, dans lequel la demande est reçue d'un dispositif informatique de saut précédent, et le fait d'obtenir l'identifiant du service comprend ce qui suit :
obtenir l'identifiant du service à partir de la demande.

6. Procédé selon l'une des revendications 1 à 5, dans lequel le fait de déterminer si le service peut être fourni au client comprend ce qui suit :
déterminer si le service peut être fourni au client en interrogeant une bibliothèque avec l'identifiant du service, la bibliothèque enregistrant un ensemble d'identifiants de services qui peuvent être pris en charge par le dispositif informatique.

7. Procédé selon la revendication 1, dans lequel la demande est reçue du client, et le fait de mettre à jour la demande comprend ce qui suit :
mettre à jour la demande en ajoutant à la demande l'identifiant du service et les informations concernant la ressource.

8. Procédé selon la revendication 1 ou 7, comprenant en outre les étapes suivantes :
recevoir une instruction pour fournir le service à partir du dispositif de fournisseur de service ;
déployer une instance de service pour le service ; et
ajouter l'identifiant du service à une bibliothèque pour enregistrer des identifiants de services qui peuvent être pris en charge par le dispositif informatique.

9. Procédé de fourniture de service, comprenant les étapes suivantes :
recevoir (810) d'un client, par un dispositif de fournisseur de service, une demande pour un service via un ou plusieurs dispositifs informatiques disponibles pour fournir le service ;
sélectionner (820) un dispositif informatique pour fournir le service à partir de l'au moins un dispositif informatique sur la base d'informations ajoutées à la demande par au moins un des un ou plusieurs dispositifs informatiques disponibles pour fournir le service concernant une ressource sur l'au moins un dispositif informatique des un ou plusieurs dispositifs informatiques disponibles pour fournir le service ; et
envoyer (830) une instruction pour fournir le service au dispositif informatique sélectionné.

10. Appareil (900) de fourniture de service comprenant les étapes suivantes :
au moins un processeur (910) ; et
au moins une mémoire (920) couplée à l'au moins un processeur (910), l'au moins une mémoire (920) comprenant des instructions (930) qui y sont stockées, l'au moins une mémoire (920) et les instructions (930) étant en outre configurées pour, conjointement avec l'au moins un processeur (910), amener l'appareil (900) à :
recevoir (310) d'un client, par l'appareil, une demande pour un service ;
obtenir (320) un identifiant du service, l'identifiant du service étant associé à au moins un des éléments suivants : une adresse IP de destination du service, un port de destination du service et un identifiant de couche d'application du service ; et
sur la base de l'identifiant du service, déterminer (330) si le service peut être fourni au client, dans lequel le fait de déterminer (330) si le service peut être fourni au client comprend ce qui suit :
déterminer si la demande est une demande initiale pour le service ; et
s'il est déterminé que la demande est une demande non initiale pour le service, sur la base de l'identifiant du service, déterminer si le service peut être fourni au client, dans lequel le procédé comprend en outre les étapes suivantes :
s'il est déterminé que la demande est la demande initiale pour le service, mettre à jour la demande en ajoutant à la demande au moins des informations concernant une ressource sur le dispositif informatique disponible pour fournir le service ; et
envoyer la demande mise à jour à un dispositif de fournisseur de service.

11. Appareil (900) selon la revendication 10, dans lequel la demande est reçue du client, et l'au moins une mémoire et les instructions sont en outre configurées pour, conjointement avec l'au moins un processeur, amener l'appareil à obtenir l'identifiant du service :
en générant l'identifiant du service sur la base d'au moins un parmi l'adresse IP de destination du service, le port de destination du service et l'identifiant de couche d'application du service,
dans lequel, par exemple, l'au moins une mémoire et les instructions sont en outre configurées pour, conjointement avec l'au moins un processeur, amener l'appareil à :
s'il est déterminé que le service ne peut pas être fourni au client, mettre à jour la demande en ajoutant l'identifiant du service à la demande ; et
envoyer la demande mise à jour à un dispositif informatique de saut suivant,
dans lequel, par exemple, le dispositif informatique de saut suivant est déterminé par adressage sur la base d'une adresse IP.

12. Appareil (900) selon la revendication 10, dans lequel la demande est reçue d'un dispositif informatique de saut précédent, et l'au moins une mémoire et les instructions sont en outre configurées pour, conjointement avec l'au moins un processeur, amener l'appareil à obtenir l'identifiant du service :
en obtenant l'identifiant du service à partir de la demande.

13. Appareil (900) selon l'une des revendications 10 à 12, dans lequel l'au moins une mémoire et les instructions sont en outre configurées pour, conjointement avec l'au moins un processeur, amener l'appareil à déterminer si le service peut être fourni au client :
en déterminant si le service peut être fourni au client en interrogeant une bibliothèque avec l'identifiant du service, la bibliothèque enregistrant un ensemble d'identifiants de services qui peuvent être pris en charge par le dispositif informatique.

14. Appareil (900) selon la revendication 10, dans lequel l'au moins une mémoire et les instructions sont en outre configurées pour, conjointement avec l'au moins un processeur, amener l'appareil à déterminer si le service peut être fourni au client :
en déterminant si la demande est une demande initiale pour le service ; et
s'il est déterminé que la demande est une demande non initiale pour le service, sur la base de l'identifiant du service, déterminer si le service peut être fourni au client,
dans lequel, par exemple, l'au moins une mémoire et les instructions sont en outre configurées pour, conjointement avec l'au moins un processeur, amener l'appareil à :
s'il est déterminé que la demande est la demande initiale pour le service, mettre à jour la demande en ajoutant à la demande au moins des informations concernant une ressource sur le dispositif informatique disponible pour fournir le service ; et
envoyer la demande mise à jour à un dispositif de fournisseur de service,
dans lequel, par exemple, la demande est reçue du client, et l'au moins une mémoire et les instructions sont en outre configurées pour, conjointement avec l'au moins un processeur, amener l'appareil à mettre à jour la demande :
en mettant à jour la demande en ajoutant à la demande l'identifiant du service et les informations concernant la ressource.

15. Appareil (900) selon la revendication 14, dans lequel l'au moins une mémoire et les instructions sont en outre configurées pour, conjointement avec l'au moins un processeur, amener l'appareil à :
recevoir une instruction pour fournir le service à partir du dispositif de fournisseur de service ;
déployer une instance de service pour le service ; et
ajouter l'identifiant du service à une bibliothèque pour enregistrer des identifiants des services qui peuvent être pris en charge par le dispositif informatique.

16. Appareil (900) de fourniture de service, comprenant :
au moins un processeur ; et
au moins une mémoire couplée à l'au moins un processeur, l'au moins une mémoire comprenant des instructions qui y sont stockées, l'au moins une mémoire et les instructions étant en outre configurées pour, conjointement avec l'au moins un processeur, amener l'appareil à :
recevoir d'un client, par l'appareil, une demande pour un service via un ou plusieurs dispositifs informatiques disponibles pour fournir le service ;
sélectionner un dispositif informatique pour fournir le service à partir de l'au moins un dispositif informatique sur la base d'informations ajoutées à la demande par au moins un des un ou plusieurs dispositifs informatiques disponibles pour fournir le service concernant une ressource sur l'au moins un dispositif informatique des un ou plusieurs dispositifs informatiques disponibles pour fournir le service ; et
envoyer une instruction pour fournir le service au dispositif informatique sélectionné.

17. Dispositif de fourniture de service, comprenant :
des moyens pour recevoir d'un client, par le dispositif, une demande pour un service ;
des moyens pour obtenir un identifiant du service, l'identifiant du service étant associé à au moins un des éléments suivants : une adresse IP de destination du service, un port de destination du service et un identifiant de couche d'application du service ; et
des moyens pour, sur la base de l'identifiant du service, déterminer si le service peut être fourni au client, dans lequel le fait de déterminer (330) si le service peut être fourni au client comprend ce qui suit :
déterminer si la demande est une demande initiale pour le service ; et
s'il est déterminé que la demande est une demande non initiale pour le service, sur la base de l'identifiant du service, déterminer si le service peut être fourni au client, dans lequel le procédé comprend en outre les étapes suivantes :
s'il est déterminé que la demande est la demande initiale pour le service, mettre à jour la demande en ajoutant à la demande au moins des informations concernant une ressource sur le dispositif informatique disponible pour fournir le service ; et
envoyer la demande mise à jour à un dispositif de fournisseur de service.

18. Dispositif de fourniture de service, comprenant :
des moyens pour recevoir d'un client, par le dispositif, une demande pour un service via un ou plusieurs dispositifs informatiques disponibles pour fournir le service ;
des moyens pour sélectionner un dispositif informatique pour fournir le service à partir de l'au moins un dispositif informatique sur la base d'informations ajoutées à la demande par au moins un des un ou plusieurs dispositifs informatiques disponibles pour fournir le service concernant une ressource sur l'au moins un dispositif informatique des un ou plusieurs dispositifs informatiques disponibles pour fournir le service ; et
des moyens pour envoyer une instruction pour fournir le service au dispositif informatique sélectionné.

19. Support de stockage lisible par ordinateur sur lequel est stocké un code informatique, le code informatique étant configuré pour, lorsqu'il est exécuté, amener un appareil à effectuer le procédé selon l'une des revendications 1 à 8 ou 9.
